# EUROPÄISCHE PATENTSCHRIFT

(11) **EP 1 179 097 B1**
(45) Veröffentlichungstag und Bekanntmachung des Hinweises auf die Patenterteilung: **09.07.2003**
(21) Anmeldenummer: 00929464.6
(22) Anmeldetag: 28.04.2000
(51) Int. Cl.: D06F 37/20

(54) **ANLENK-VORRICHTUNG ZUR ANLENKUNG EINES REIBUNGSDÄMPFERS AN EINEM MASCHINENGESTELL EINER WASCHMASCHINE**
COUPLING DEVICE FOR COUPLING A FRICTIONAL DAMPER TO A MACHINE FRAME OF A WASHING MACHINE
DISPOSITIF D'ARTICULATION POUR ARTICULER UN AMORTISSEUR A FRICTION SUR UN CHASSIS D'UN LAVE-LINGE

(30) Priorität: 07.05.1999 DE 19921152
(43) Veröffentlichungstag der Anmeldung: 13.02.2002
(73) Patentinhaber: SUSPA Compart GmbH, 92237 Sulzbach-Rosenberg (DE)
(72) Erfinder: MAYER, Dieter, D-92237 Sulzbach-Rosenberg (DE); SIEGNER, Helge, D-90518 Altdorf (DE)
(74) Vertreter: Rau, Albrecht
(86) Internationale Anmeldenummer: EP0003882
(87) Internationale Veröffentlichungsnummer: WO00068488

(56) Entgegenhaltungen:
- DE-A- 3 041 878
- US-A- 3 509 742
- US-A- 4 729 458

## Beschreibung

Die Erfindung betrifft eine Anlenk-Vorrichtung zur Anlenkung eines Reibungsdämpfers an einem Maschinengestell einer Waschmaschine mit Schleudergang gemäß dem Oberbegriff des Anspruches 1.

Es ist beispielsweise aus der EP 0 336 176 B1 (entspr. US 4,934,493) bekannt, in Waschmaschinen mit Schleudergang das Waschaggregat über Reibungsdämpfer gegenüber dem Maschinengestell zu dämpfen. Die Reibungsdämpfer. sind gegenüber dem Maschinengestell über Anlenk-Vorrichtungen angelenkt. Die Anlenk-Vorrichtungen sind im einfachsten durch offenkundige Vorbenutzung bekannten Fall aus einem elastischen Material zylindrisch ausgebildet und einerseits mit dem Stößel des Reibungsdämpfers und andererseits mit dem Maschinengestell der Waschmaschine fest verbunden. Beim Schleudern treten Oszillationen des Waschaggregats parallel und senkrecht zur Trommelachse sowie Taumelbewegungen des Waschaggregats auf, die zu verschieden starken Auslenkungen des Anlenkpunktes zwischen Reibungsdämpfer und Waschaggregat parallel zur Trommelachse und senkrecht zu dieser führen. Nachteilig an den bekannten Anlenk-Vorrichtungen ist, daß eine Anlenkung der Reibungsdämpfer an dem Maschinengestell nicht entsprechend der Stärke der einzelnen Komponenten der Oszillationen erfolgen kann.

Aus der US 4,729,458 ist ein Reibungsdämpfer für eine Waschmaschine bekannt. Dieser weist an seinen freien Enden Anlenk-Vorrichtungen auf, die im wesentlichen aus einer rechteckigen Gummiplatte bestehen. Die Kanten des Rechtecks sind verschieden lang, so daß die Dämpfung um eine erste Biege-Achse verschieden ist von der Dämpfung um eine zweite senkrecht zur ersten verlaufenden Biege-Achse. Nachteilig hieran ist, daß das Verhältnis der Dämpfungscharakteristiken nur in einem sehr engen Bereich einstellbar ist, da durch die Festigkeit des Gummis sowie durch den für die Anlenk-Vorrichtung zur Verfügung stehenden Platz sehr enge Zwangsbedingungen vorgegeben sind. Darüber hinaus ist das Dämpfungsverhalten der Anlenk-Vorrichtung entlang der Mittel-Längs-Achse des Reibungsdämpfers im wesentlichen nicht einstellbar.

Aus der US 3,509,742 ist ein Federbein für eine Waschmaschine bekannt, das über zwei Anlenk-Vorrichtungen mit dem Waschaggregat und dem Maschinengestell verbunden ist. Die Anlenk-Vorrichtung besteht im wesentlichen aus zwei übereinander angeordneten rechteckigen Gummiplatten. Auch hier ist die Einstellung des Verhältnisses der Biegesteifigkeit um eine erste Biegeachse zur Biegesteifigkeit um eine senkrecht hierzu verlaufende Biege-Achse sehr begrenzt. Darüber hinaus ist das Dämpfungsverhalten der Anlenk-Vorrichtung entlang der Mittel-Längs-Achse des Federbeins im wesentlich kaum einstellbar.

Der Erfindung liegt die Aufgabe zugrunde, eine Anlenk-Vorrichtung zur Anlenkung eines Reibungsdämpfers an dem Maschinengestell einer Waschmaschine mit Waschaggregat bereit zu stellen, die eine den einzelnen Komponenten von Taumelbewegungen des Waschaggregats entsprechende Anlenkung ermöglicht.

Die Aufgabe wird durch die Merkmale des kennzeichnenden Teils des Anspruchs 1 gelöst Der Kern der Erfindung besteht darin, eine Anlenk-Vorrichtung bereitzustellen, bei der die Biegesteifigkeit, d.h. die bei einer Durchbiegung auftretende Gegenkraft, bei einer Auslenkung parallel zur Trommelachse des Waschaggregats größer ist als bei einer Auslenkung senkrecht zur Trommelachse.

Weitere vorteilhafte Ausgestaltungen der Erfindung ergeben sich aus den Unteransprüchen.

Zusätzliche Merkmale und Einzelheiten der Erfindung ergeben sich aus der Beschreibung anhand der Zeichnung. Es zeigen:

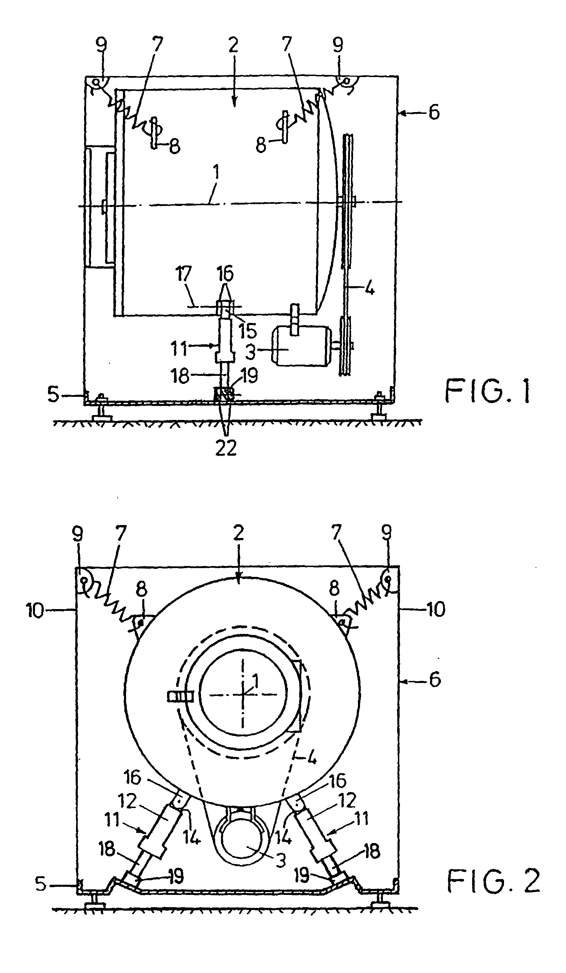

- Fig. 1: eine Trommelwaschmaschine in schematischer Darstellung in Seitenansicht mit einem Reibungsdämpfer und einer Anlenk-Vorrichtung,
- Fig. 2: eine Trommelwaschmaschine gemäß Fig. 1 in Vorderansicht,

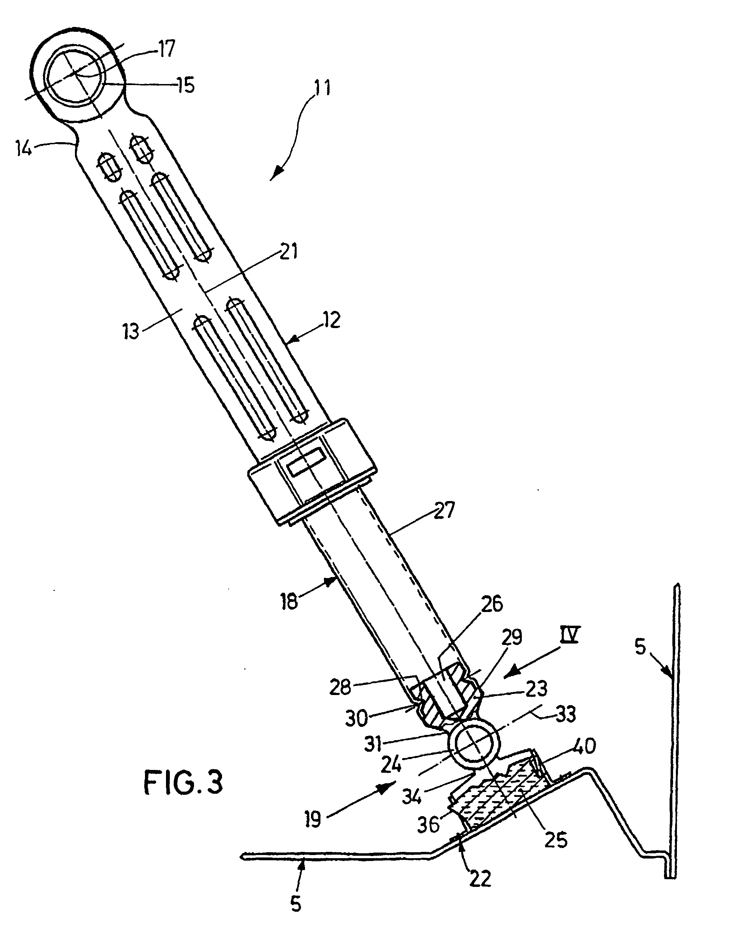

- Fig. 3: eine Ausschnittvergrößerung des Reibungsdämpfers und der Anlenk-Vorrichtung gemäß der Ansicht von Fig. 2,
- Fig. 4: eine Ansicht der Anlenk-Vorrichtung gemäß dem Sichtpfeil IV in Fig. 3 und
- Fig. 5: eine Querschnittsdarstellung gemäß der Schnittlinie V-V in Fig. 4.

Eine Trommelwaschmaschine mit waagrechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen gebildeten Maschinengestell 5 abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden 10 des Gehäuses 6 ausgebildet sind. Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP 0 108 217 B1 (entsprechend US-PS 4 991 412) bekannt sind. Entscheidend ist, daß das Waschaggregat 2 frei schwingungsfähig aufgehängt beziehungsweise abgestützt ist.

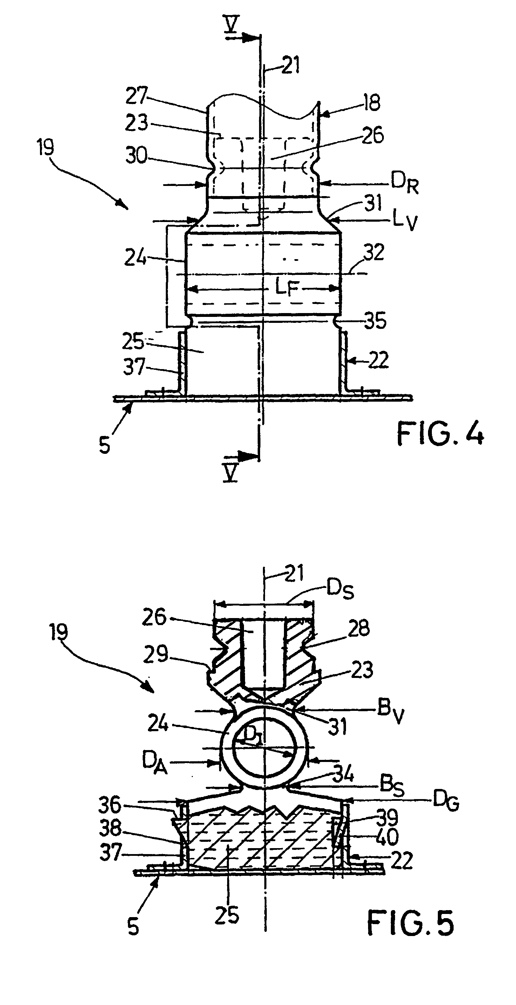

Zwischen dem Waschaggregat 2 und dem Maschinengestell 5 sind weiterhin Reibungsdämpfer 11 angeordnet, die beispielsweise aus der EP 0 336 176 B 1 (entspricht US 4,934,493) bekannt sind. Jeder Reibungsdämpfer 11 weist ein Gehäuse 12 auf. Das Gehäuse 12 besteht im wesentlichen aus einem zylindrischen Rohr 13, das an einem Ende mittels eines Bodens 14 verschlossen ist. An der Außenseite des Bodens 14 ist eine Gelenkbüchse 15 als Anlenkelement angebracht, mittels derer der Reibungsdämpfer 11 an einem Lager 16 am Waschaggregat 2 so angebracht wird, daß der Reibungsdämpfer 11 um eine Schwenkachse 17 relativ zum Waschaggregat 2 schwenkbar angebracht ist, die parallel zur Trommelachse 1 verläuft. Der jeweilige Reibungsdämpfer 11 weist weiterhin einen Stößel 18 auf, der an seinem äußeren Ende eine elastische Anlenk-Vorrichtung 19 aufweist. Der Reibungsdämpfer 11 und die Anlenk-Vorrichtung 19 weisen eine gemeinsame Mittel-Längs-Achse 21 auf. Über die Anlenk-Vorrichtung 19 wird der Reibungsdämpfer 11 mit einem am Maschinengestell 5 angebrachten Verbindungs-Sockel 22 verbunden. Die Anlenk-Vorrichtung 19 weist entlang der Mittel-Längs-Achse 21 einander jeweils nachgeordnet einen als erstes Anschluß-Element ausgebildeten Stößel-Anschluß-Stopfen 23, ein rohrförmiges Feder-Element 24 und einen als zweites Anschluß-Element ausgebildeten Gestell-Anschluß-Stopfen 25 auf, die allesamt einteilig ausgebildet sind. Der Stopfen 23 ist im wesentlichen kreiszylindrisch mit einem Durchmesser D_{S} und konzentrisch zur Achse 21 ausgebildet und weist an seinem freien Ende ein Sackloch 26 zur Erhöhung der Deformierbarkeit des Stopfens 23 radial zur Achse 21 auf. Zur Verbindung des Stopfens 23 mit dem im wesentlichen aus einem dünnwandigen Metall-Rohr 27 bestehenden Stößel 18 weist der Stopfen 23 eine Ringnut 28 sowie eine in Richtung des Feder-Elements 24 nachgeordnete Anschlag-Kante 29 auf. Das Rohr 27 befindet sich endseitig im Anschlag mit der Anschlag-Kante 29 und ist mit einer sich radial zur Achse 21 erstreckenden im Rohr 27 ausgebildeten Sikke 30 am Stopfen 23 befestigt. Das Feder-Element 24 ist über einen Verbindungs-Steg 31 mit dem Stopfen 23 verbunden. Das Feder-Element 24 ist ringzylindrisch und konzentrisch zu einer ersten Biege-Achse 32 ausgebildet, die die Achse 21 senkrecht schneidet und parallel zur Trommelachse 1 verläuft. Eine senkrecht zu den Achsen 21 und 32 verlaufende und beide in einem Punkt schneidende Achse wird als zweite Biege-Achse 33 bezeichnet. Es ist auch möglich, Feder-Elemente 24 mit einem elliptischen oder rechteckigen Querschnittsprofil oder einem beliebigen anderen Profil vorzusehen. Die Länge L_{F} des Feder-Elements 24 parallel zur Achse 32 ist größer als der Außendurchmesser D_{A} des Feder-Elements 24 parallel zur Biege-Achse 33. Es gilt: L_{F}/D_{A} ≥ 1,5 und insbesondere L_{F}/D_{A} > 2. Für das Verhältnis des Außendurchmessers D_{A} zum Innendurchmesser D₁ des Feder-Elements 24 gilt: D_{A}/D₁ ≈ 1,4. Für die Breite B_{V} des Verbindungs-Steges 31 parallel zur Biege-Achse 33 gilt: B_{V} ≤ D_{A}, B_{V} ≤ D_{S} und insbesondere B_{V} ≤ D₁. Die Länge L_{V} des Verbindungs-Stegs 31 parallel zur Biege-Achse 32 nimmt von der Länge L_{F} des Feder-Elements 24 zum Außendurchmesser D_{R} des Rohres 27 stetig ab. An der dem Verbindungs-Steg 31 gegenüberliegenden Seite des Feder-Elements 24 ist ein Verbindungs-Steg 34 vorgesehen, über den der Stopfen 25 mit dem Feder-Element 24 verbunden ist. Für die Breite B_{S} des Verbindungs-Steges 34 parallel zur Biege-Achse 33 gilt: B_{S} ≈ B_{V} und insbesondere B_{S} ≤ B_{V}. An den entlang der Biege-Achse 32 weisenden Enden weist der Verbindungs-Steg 34 Längs-Nuten 35 auf. Der Stopfen 25 ist im wesentlichen ringzylindrisch und konzentrisch zur Achse 21 ausgebildet und weist einen Durchmesser D_{G} auf, für den gilt: B_{S} ≤ D_{G}. Er weist gemäß einer ersten, in der linken Hälfte von Fig. 5 gezeigten Ausführungsform umfangsseitig angeordnete, radial nach außen vorspringende Rastnasen 36 auf, die sich zum freien Ende des Stopfens 25 hin verjüngen. Der Verbindungs-Sockel 22 weist eine ringzylindrische Wand 37 mit Rast-Öffnungen 38 auf, in die die Rastnasen 36 eingreifen und die Anlenk-Vorrichtung 19 auf Zug gegenüber dem Maschinengestell 5 arretieren. Gemäß einer zweiten, in der rechten Hälfte von Fig. 5 gezeigten Ausführungsform weist der Stopfen 25 umfangsseitig eine Ringnut 39 auf. Anstelle der Ringnut 39 können auch einzelne Ausnehmungen vorgesehen sein. In die Ringnut 39 greifen einzelne, einseitig mit der Wand 37 verbundene Arretierarme 40 ein, die die Anlenk-Vorrichtung 19 auf Zug gegenüber dem Maschinengestell 5 arretieren. Die Anlenk-Vorrichtung 19 ist aus einem thermoplastischen Polyelastomer oder einem thermoplastischen Polyurethan gefertigt. Es können auch andere flexible Materialien verwendet werden. Insbesondere kann auch lediglich das Feder-Element 24 aus einem elastischen Material bestehen. Es ist auch möglich, anstelle der Gelenkbüchse 15 eine Anlenk-Vorrichtung 19 vorzusehen, die dann einerseits mit dem Gehäuse 12 und andererseits mit dem Waschaggregat 2 verbunden ist. Es ist möglich, eine erfindungsgemäße Anlenk-Vorrichtung 19 mit von den oben angegebenen Größenverhältnissen abweichenden Größen D_{S}, D_{R}, B_{V}, D_{A}, D_{I}, B_{S}, D_{G}, L_{F}, L_{V} vorzusehen.

Im folgenden wird die Funktionsweise der Anlenk-Vorrichtung 19 beschrieben. Durch den Betrieb des Waschaggregats 12 beim Schleudern kommt es nicht nur zu Schwingungen senkrecht zur Trommelachse 1, sondern auch zu Schwingungen parallel zu dieser, nämlich Nickschwingungen, und entsprechenden Überlagerungen von beiden, d.h. zu Taumelschwingungen. Diese werden durch die Reibungsdämpfer 11 großteils gedämpft. Die Schwingungen des Waschaggregats 2 führen dazu, daß die Gelenkbuchse 15 verschoben wird, wodurch ein Biegemoment auf die Anlenk-Vorrichtung 19 wirkt. Aufgrund des oben beschriebenen Aufbaus der Anlenk-Vorrichtung 19 weist diese um die Biege-Achse 32 eine Biegesteifigkeit auf, die kleiner ist als die Biegesteifigkeit um die Biege-Achse 33. Dies wird durch den rohrförmigen Aufbau des Feder-Elements 24 bedingt, wobei das Verhältnis beider Biegesteifigkeiten durch Änderung der Abmessungen frei eingestellt werden kann. Reduziert wird die Biegesteifigkeit um die Biege-Achse 32 relativ zur Biegesteifigkeit um die Biege-Achse 33 durch das Vorsehen relativ zum Außendurchmesser D_{A} schmaler Verbindungs-Stege 31 und 34. Dies bedeutet, daß Schwingungen parallel zur Trommelachse 1 stärker gedämpft werden als Schwingungen senkrecht zur Trommelachse 1. Durch den Reibungsdämpfer 11 nicht gedämpfte, verbleibende Schwingungen, insbesondere parallel zur Achse 21 werden durch eine Deformation des Feder-Elements 24 gedämpft. Durch die Anlenk-Vorrichtung 19 ist es somit möglich, einen in verschiedene Richtungen mit verschieden großer Kraft ausgelenkten Reibungsdämpfer 11 entsprechend der Größe der Kräfte an dem Maschinengestell 5 anzulenken.

## Patentansprüche

1. Anlenk-Vorrichtung (19) zur Anlenkung eines eine Mittel-Längs-Achse (21) aufweisenden Reibungsdämpfers (11), der an einem eine Trommelachse (1) aufweisenden, schwingungsfähig gelagerten Waschaggregat (2) angelenkt ist, an einem Maschinengestell (5) einer Waschmaschine (2) mit Schleudergang, mit
a) einer ersten Biege-Achse (32), die senkrecht zur Mittel-Längs-Achse (21) und parallel zur Trommelachse (1) verläuft,
b) einer zweiten Biege-Achse (33), die senkrecht zur Mittel-Längs-Achse (21) und zur ersten Biege-Achse (32) verläuft und beide in einem Punkt schneidet,
c) einem ersten Anschluß-Element zur Verbindung der Anlenk-Vorrichtung (19) mit dem Reibungsdämpfer (11),
d) einem zweiten Anschluß-Element zur Verbindung der Anlenk-Vorrichtung (19) mit dem Maschinengestell (5) und
e) einem zwischen dem ersten Anschluß-Element und dem zweiten Anschluß-Element angeordneten, mit beiden verbundenen Feder-Element (24),
f) wobei die Biegesteifigkeit der Anlenk-Vorrichtung (19) um die zweite Biege-Achse (33) größer ist als die Biegesteifigkeit um die erste Biege-Achse (32), **dadurch gekennzeichnet, daß**
g) das Feder-Element (24) rohrförmig ausgebildet ist.

2. Anlenk-Vorrichtung (19) gemäß Anspruch 1, **dadurch gekennzeichnet, daß** das Feder-Element (24) konzentrisch zur ersten Biege-Achse (32) ausgebildet ist.

3. Anlenk-Vorrichtung (19) gemäß einem der vorangehenden Ansprüche, **dadurch gekennzeichnet, daß** das Feder-Element (24) über einen ersten Verbindungs-Steg (31) mit dem ersten Anschluß-Element verbunden ist.

4. Anlenk-Vorrichtung (19) gemäß einem der vorangehenden Ansprüche, **dadurch gekennzeichnet, daß** das Feder-Element (24) über einen zweiten Verbindungs-Steg (32) mit dem zweiten Anschluß-Element verbunden ist.

5. Anlenk-Vorrichtung (19) gemäß Anspruch 3, **dadurch gekennzeichnet, daß** die Breite B_{V} des ersten Verbindungs-Steges (31) bezogen auf die zweite Biege-Achse (33) kleiner ist als der Durchmesser D_{S} des ersten Anschluß-Elements.

6. Anlenk-Vorrichtung (19) gemäß Anspruch 4, **dadurch gekennzeichnet, daß** die Breite B_{S} des zweiten Verbindungs-Steges (34) bezogen auf die zweite Biege-Achse (33) kleiner ist als der Durchmesser D_{G} des zweiten Anschluß-Elements.

7. Anlenk-Vorrichtung (19) gemäß einem der Ansprüche 1 oder 2, **dadurch gekennzeichnet, daß** der Außendurchmesser D_{A} des Feder-Elements (24) senkrecht zur ersten Biege-Achse (32) kleiner ist als die Länge L_{F} des Feder-Elements (24) parallel zur ersten Biege-Achse (32).

8. Anlenk-Vorrichtung (19) gemäß einem der vorangehenden Ansprüche, **dadurch gekennzeichnet, daß** das erste Anschluß-Element und das Feder-Element (24) und das zweite Anschluß-Element einteilig ausgebildet sind.

9. Anlenk-Vorrichtung (19) gemäß einem der vorangehenden Ansprüche, **dadurch gekennzeichnet, daß** das Feder-Element (24) aus thermoplastischen Elastomeren oder thermoplastischen Polyurethanen gebildet ist.

## Claims

1. A pivotable connection device (19) for pivotable connection of a friction damper (11), which has a central longitudinal axis (21) and is pivotably connected on a washer assembly (2) that has a drum axis (1) and is supported in a manner capable of vibration, to a machine frame (5) of a washing machine (2) with a spin cycle, having
a) a first bending axis (32), which extends perpendicular to the central longitudinal axis (21) and parallel to the drum axis (1);
b) a second bending axis (33), which extends parallel to the central longitudinal axis (21) and to the first bending axis (32) and intersects them both at one point;
c) a first connection element for connecting the pivotable connection device (19) to the friction damper (11);
d) a second connection element for connecting the pivotable connection device (19) to the machine frame (5); and
e) a spring element (24), disposed between the first connection element and the second connection element and connected to both of them;
f) wherein the flexural strength of the pivotable connection device (19) about the second bending axis (33) is greater than the flexural strength about the first bending axis (32), **characterized in that** the spring element (24) is embodied in tubular form.

2. The pivotable connection device (19) of claim 1, **characterized in that** the spring element (24) is embodied concentrically to the first bending axis (32).

3. The pivotable connection device (19) of one of the foregoing claims, **characterized in that** the spring element (24) is connected to the first connection element via a first connecting rib (31).

4. The pivotable connection device (19) of one of the foregoing claims, **characterized in that** the spring element (24) is connected to the second connection element via a second connecting rib (32).

5. The pivotable connection device (19) of claim 3, **characterized in that** the width B_{V} of the first connecting rib (31), referred to the second bending axis (33), is less than the diameter D_{S} of the first connection element.

6. The pivotable connection device (19) of claim 4, **characterized in that** the width B_{S} of the second connecting rib (34), referred to the second bending axis (33), is less than the diameter D_{G} of the second connection element.

7. The pivotable connection device (19) of one of claims 1 or 2, **characterized in that** the outside diameter D_{A} of the spring element (24) perpendicular to the first bending axis (32) is less than the length L_{F} of the spring element (24) parallel to the first bending axis (32).

8. The pivotable connection device (19) of one of the foregoing claims, **characterized in that** the first connection element and the spring element (24) and second connection element are embodied in one piece.

9. The pivotable connection device (19) of one of the foregoing claims, **characterized in that** the spring element (24) is formed of thermoplastic elastomers or thermoplastic polyurethanes.

## Revendications

1. Dispositif d'articulation (19) destiné à l'articulation sur un châssis (5) d'une machine à laver (2) à cycle d'essorage d'un amortisseur à friction (11) comportant un axe longitudinal médian (21), lequel est articulé sur un groupe de lavage (2) susceptible d'osciller, comportant un axe (1) de tambour, avec
a) un premier axe de flexion (32), qui s'étend perpendiculairement à l'axe longitudinal médian (21) et parallèlement à l'axe (1) de tambour,
b) un deuxième axe de flexion (33) qui s'étend perpendiculairement à l'axe longitudinal médian (21) et au premier axe de flexion (32), et coupe ces deux axes en un point,
c) un premier élément de raccordement destiné à la liaison du dispositif d'articulation (19) avec l'amortisseur de friction (11),
d) un deuxième élément de raccordement destiné à la liaison du dispositif d'articulation (19) avec le châssis (5) de la machine, et
e) un élément élastique (24) disposé entre le premier élément de raccordement et le deuxième élément de raccordement, et relié aux deux,
f) la rigidité à la flexion du dispositif d'articulation (19) autour du deuxième axe de flexion (33) étant plus importante que la rigidité à la flexion autour du premier axe de flexion (32), **caractérisé en ce que**
g) l'élément élastique (24) est agencé avec une forme tubulaire.

2. Dispositif d'articulation (19) selon la revendication 1, **caractérisé en ce que** l'élément élastique (24) est agencé de façon concentrique au premier axe de flexion (32).

3. Dispositif d'articulation (19) selon l'une des revendications précédentes, **caractérisé en ce que** l'élément élastique (24) est relié au premier élément de raccordement par l'intermédiaire d'une première entretoise de liaison (31).

4. Dispositif d'articulation (19) selon l'une quelconque des revendications précédentes, **caractérisé en ce que** l'élément élastique (24) est relié au deuxième élément de raccordement par l'intermédiaire d'une deuxième entretoise de liaison (32).

5. Dispositif d'articulation (19) selon la revendication 3, **caractérisé en ce que,** rapportée au deuxième axe de flexion (33), la largeur B_{V} de la première entretoise de liaison (31) est inférieure au diamètre D_{S} du premier élément de raccordement.

6. Dispositif d'articulation (19) selon la revendication 4, **caractérisé en ce que,** rapportée au deuxième axe de flexion (33), la largeur B_{S} de la deuxième entretoise de liaison (34) est inférieure au diamètre D_{G} du deuxième élément de raccordement.

7. Dispositif d'articulation (19) selon l'une des revendications 1 ou 2, **caractérisé en ce que,** perpendiculairement au premier axe de flexion (32), le diamètre extérieur D_{A} de l'élément élastique (24) est inférieur à la longueur L_{F} de l'élément élastique (24) parallèlement au premier axe de flexion (32).

8. Dispositif d'articulation (19) selon l'une quelconque des revendications précédentes, **caractérisé en ce que** le premier élément de raccordement et l'élément élastique (24), ainsi que le deuxième élément de raccordement, sont réalisés d'un seul tenant.

9. Dispositif d'articulation (19) selon l'une quelconque des revendications précédentes, **caractérisé en ce que** l'élément élastique (24) est constitué d'élastomères thermoplastiques ou de polyuréthanes thermoplastiques.
